# EUROPÄISCHE PATENTANMELDUNG

(11) **EP 2 481 999 A1**
(43) Veröffentlichungstag der Anmeldung: **01.08.2012**
(21) Anmeldenummer: 12152636.2
(22) Anmeldetag: 26.01.2012
(51) Int. Cl.: F24F 11/04, F24F 13/065, F24F 13/10, F24F 13/12, B60H 1/00, E06B 7/084

(54) **Verstellbares Luftventil**

(30) Priorität: 26.01.2011 DE 102011009517
(71) Anmelder: The Heating Company BVBA, 3650 Dilsen (BE)
(72) Erfinder: Romijn, Adriaan, 3621 Lanaken-Rekem (BE); Fotij, An, 3130 Begijnendijk (BE)
(74) Vertreter: Schrooten, Rolf

(57) **Zusammenfassung**

Die Erfindung betrifft eine Verstellbares Luftventil (1), das an einem Ende einer Luftleitung (3) zum Regulieren der durchgelassenen Luftmenge einsetzbar ist, insbesondere für eine Lüftungsanlage eines Gebäudes, umfassend ein Einsatzteil (4) mit mindestens einer Luftdurchgangsöffnung (14) sowie ein Verschlussteil (7), welches relativ zu dem Einsatzteil (4) derart verstellbar ist, dass zwischen der mindestens einen Luftdurchgangsöffnung (14) und dem Verschlussteil (7) verschieden große Strömungsquerschnitte (15) freigebbar sind, wobei das Verschlussteil (7) dicht an dem Einsatzteil (4) anliegt und relativ zum Einsatzteil (4) um eine in Strömungsrichtung der Luft verlaufende zentrale Achse (11) drehbar gelagert ist, und wobei das Verschlussteil (7) mindestens eine Luftdurchgangsöffnung (13) aufweist, die durch Verdrehen des Verschlussteils (7) unterschiedlich weit mit der mindestens einen Luftdurchgangsöffnung (14) des Einsatzteils (4) in Überdeckung bringbar ist.

## Beschreibung

Die vorliegende Erfindung betrifft ein verstellbares Luftventil nach dem Oberbegriff von Anspruch 1. Das Luftventil, das insbesondere für eine Lüftungsanlage eines Gebäudes bestimmt ist, kann an einem inneren oder äußeren Ende einer Luftleitung montiert werden, um die dort in der einen oder anderen Richtung durchgelassene Luftmenge zu regulieren. Über mehrere derartige Luftventile kann die Verteilung eines durch mehrere Leitungen strömenden Luftstroms eingestellt werden, um eine für den Benutzer angenehme Luftverteilung eines Lüftungssystems zu erzielen.

Das Luftventil, das sowohl zur Belüftung als auch zur Entlüftung eingesetzt werden kann, besteht im wesentlichen aus zwei relativ zueinander verstellbaren Teilen, wovon das erste Teil als Einsatzteil bezeichnet wird, welches in das Ende einer Luftleitung eingesetzt werden kann. In einem inneren Bereich weist das Einsatzteil mindestens eine Luftdurchgangsöffnung auf. Das zweite Teil wird als Verschlussteil bezeichnet und kann relativ zu dem Einsatzteil derart verstellt werden, dass zwischen der mindestens einen Luftdurchgangsöffnung des Einsatzteils und dem Verschlussteil verschieden große freie Strömungsquerschnitte einstellbar sind, um hierdurch die durchgelassene Luftmenge festzulegen.

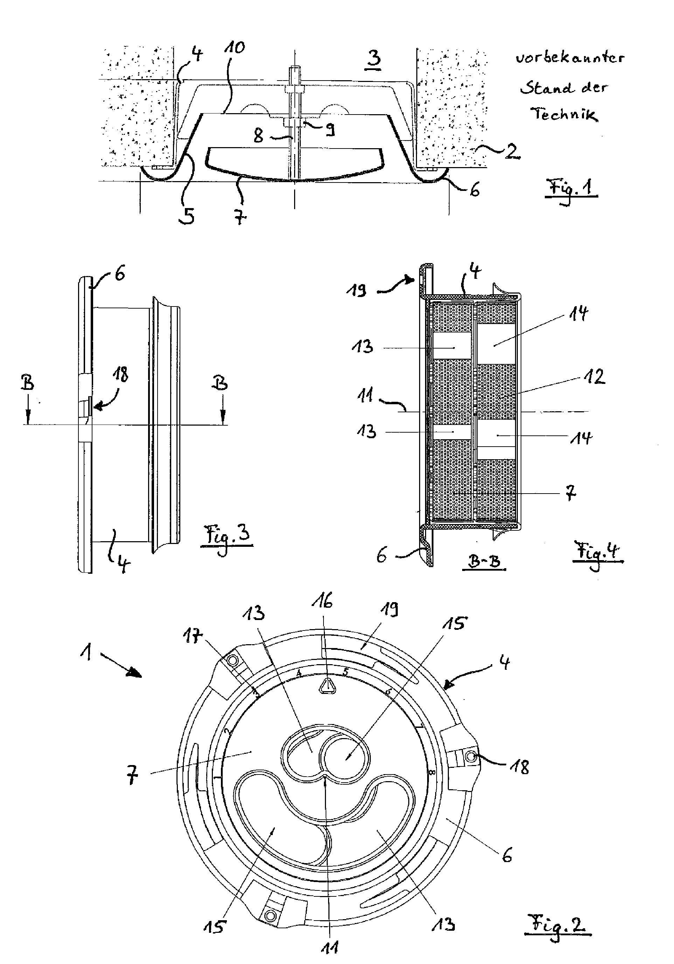

Bei einem in Figur 1 gezeigten bekannten Luftventil dieser Bauart ist das Verschlussteil innerhalb eines konischen Bereichs des Einsatzteils angeordnet. Es kann mittels einer zentralen Gewindestange in axialer Richtung relativ zum Einsatzteil verstellt werden, um so den freien Öffnungsquerschnitt zwischen dem inneren Ende des konischen Bereichs des Einsatzteils und dem Verschlussteil und damit die durchgelassene Luftmenge variieren zu können. Von Nachteil bei dieser Standardform von Luftventilen für Gebäudelüftungsanlagen ist neben der sich relativ aufwendig gestaltenden Verstellung vor allem, dass bei der Einstellung nicht oder nur sehr ungenau zu erkennen ist, in welcher Position sich das Verschlussteil befindet und somit die durchgelassene Luftmenge allenfalls nur sehr grob abgeschätzt werden kann.

Ferner sind Luftventile für Lüftungsanlagen von Gebäuden bekannt, bei denen ein Einsatzteil eine Mehrzahl von ovalen Öffnungen aufweist, die jeweils von einem entfernbaren Stopfen verschlossen sind. Durch das Entfernen von mehr oder weniger Stopfen können unterschiedliche Gesamt-Öffnungsquerschnitte freigegeben und somit die durchgelassene Luftmenge eingestellt werden. Von Nachteil ist hierbei die begrenzte Anzahl von unterschiedlichen einstellbaren Öffnungsquerschnitten und der bei Entfernen von Stopfen sowie vor allem beim erneuten Verschließen einzelner Öffnungen mit zuvor entfernten Stopfen erforderliche hohe Aufwand, der ein leichtes Variieren der durchgelassenen Luftmenge verhindert.

Aufgabe der vorliegenden Erfindung ist es daher, ein konstruktiv einfaches und preiswert herzustellendes Luftventil der eingangs genannten Art zu schaffen, das mit geringem Aufwand leicht zu verstellen ist und dabei eine verbesserte Einstellungsgenauigkeit bietet.

Diese Aufgabe wird erfindungsgemäß durch ein Luftventil nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass das Verschlussteil abgedichtet an dem Einsatzteil anliegt und relativ zum Einsatzteil um eine in Strömungsrichtung der Luft verlaufende zentrale Achse drehbar gelagert ist, und dass auch das Verschlussteil mindestens eine Luftdurchgangsöffnung aufweist, die durch Verdrehen des Verschlussteils unterschiedlich weit mit der mindestens einen Luftdurchgangsöffnung des Einsatzteils in Überdeckung gebracht werden kann.

Der Hauptvorteil liegt dabei darin, dass die Einstellung der durchgelassenen Luftmenge durch einfaches Verdrehen des Verschlussteils besonders leicht und schnell von Hand ausgeführt werden kann. Deshalb sind die erfindungsgemäßen Luftventile besonders anwenderfreundlich und sie laden den Benutzer geradezu zu einer schnellen Anpassung der jeweils eingestellten Luftdurchgangsmenge der Belüftungsanlage ein.

Ein weiterer wesentlicher Vorteil besteht darin, dass aufgrund der frei sichtbaren Öffnungsfläche, mit der sich die Luftdurchgangsöffnungen der beiden Teile überdecken, der eingestellte freie Strömungsquerschnitt besonders leicht zu erkennen ist, so dass eine relativ exakte Einstellung der durchgelassenen Luftmenge erfolgen kann.

Außerdem ist das erfindungsgemäße Luftventil bei einfacher Konstruktion kostengünstig herzustellen und leicht zu montieren.

Vorteilhafterweise kann das Verschlussteil auch in eine oder mehrere Verschlussposition(en) gedreht werden, in der alle Luftdurchgangsöffnungen des Einsatzteils vollständig vom Verschlussteil abgedeckt sind, so dass ein Luftdurchgang verhindert wird.

Eine konstruktiv besonders einfache Bauform kann dadurch erreicht werden, dass die Luftdurchgangsöffnungen jeweils ein einem planen kreisförmigen Bereich des Einsatzteils und des Verschlussteils vorgesehen sind und diese Bereiche parallel aneinander anliegen. Alternativ können die Luftdurchgangsöffnungen aber auch in anders ausgeformten Flächen des Einsatzteils und des Verschlussteils ausgebildet sein, die parallel zueinander verdrehbar sind.

Besonders vorteilhaft ist es, wenn an dem Einsatzteil oder an dem Verschlussteil eine Markierung, insbesondere eine Pfeilspitze aufgebracht ist, die über eine Skala verstellbar ist, welche an dem anderen Teil vorgesehen ist und vorzugsweise mehrere Teilstriche oder Zahlen aufweist. So kann besonders leicht eine besonders exakte und reproduzierbar Einstellung der durchgelassenen Luftmenge vorgenommen werden.

Gemäß einer besonders bevorzugten Ausführungsform der Erfindung erstreckt sich mindestens eine Luftdurchgangsöffnung im Einsatzteil und/oder im Verschlussteil entlang einer Kreisbahn. Hierdurch kann aufgrund der drehbaren Lagerung der beiden Teile eine besonders feine Einstellung der durchgelassenen Luftmenge erfolgen.

Vorzugsweise können sich dabei im Einsatzteil und/oder im Verschlussteil auch mehrere Luftdurchgangsöffnungen entlang jeweils eines Kreisbogenabschnitts erstrecken, wobei die Kreisbogenabschnitte dann unterschiedlich große Radien haben.

Besonders vorteilhaft ist es dabei ferner, wenn sich die Luftdurchgangsöffnungen kreisbahnförmig über einen Winkel erstrecken, der zwischen 90° und 180°, vorzugsweise zwischen 135° und 175° liegt. Da der Drehbereich des Verschlussteils zur Einstellung des freien Strömungsquerschnitts dem Erstreckungswinkel der Luftdurchgangsöffnungen entspricht, kann bei diesen relativ großen Erstreckungswinkeln die Feinheit der Einstellung der durchgelassenen Luftmenge maximiert werden.

Es reicht dabei aus, wenn nur in einem der beiden Teile des Luftventils sich die Luftdurchgangsöffnung(en) entlang einer Kreisbahn erstreckt. Im anderen Teil können beispielsweise auch mehrere kleinere und voneinander getrennte Öffnungen vorgesehen sein. Vorteilhafterweise sind aber in beide Teile Luftdurchgangsöffnungen eingebracht, die sich jeweils entlang einer Kreisbahn erstrecken. Besonders vorteilhaft ist es dabei, wenn sich im Einsatzteil und im Verschlussteil jeweils zwei Luftdurchgangsöffnungen entlang jeweils eines Kreisbogenabschnitts erstrecken, wobei die beiden Kreisbogenabschnitte auf unterschiedlichen Radien liegen und umfangsmäßig um 180° zueinander versetzt sind.

Eine besonders leise und somit für den Anwender besonders angenehme Ausführungsform kann dadurch erzielt werden, dass das Einsatzteil und das Verschlussteil jeweils aus einem Material mit schallabsorbierenden Eigenschaften bestehen. Ein derartiges Material kann beispielsweise geschäumte Polyether und/oder Polyurethane enthalten.

Besonders vorteilhaft ist es, wenn das Einsatzteil einen nach außen vorstehenden Kragen aufweist, der im eingesetzten Zustand an der Wand-oder Deckenfläche anliegt, die das Ende der Luftleitung umgibt. Der Kragen ist vorzugsweise mit Montageelementen, insbesondere mit Montageöffnungen versehen, über die das Luftventil an der die Luftleitung umgebenden Wandfläche montierbar ist und/oder über die weitere Anbauteile, beispielsweise Blenden oder Zierelemente montiert werden können.

Gemäß einer weiteren besonders bevorzugten Ausführungsform der Erfindung ist an dem Einsatzteil des Luftventils ein Abdeckelement lösbar befestigt. Dabei wird das Abdeckelement mittels axialer Abstandshalter derart axial vor den Luftdurchgangsöffnungen gehalten, dass es diese in axialer Richtung betrachtet verdeckt. Um die am Ventil eingestellte Luftmenge dennoch ungehindert durchlassen zu können, sind zwischen den Abstandshaltern und axial zwischen dem Einsatzteil und dem Abdeckelement Luftdurchlässe ausgebildet, durch welche die Luft in radialer Richtung strömen kann. Das Abdeckelement kann zur Umlenkung des Luftstroms ausgebildet sein und/oder dekorativen Zwecken dienen und eine optische Anpassungen an die Umgebung ermöglichen. Vorzugsweise ist das Abdeckelement in der Art eines Bajonettverschlusses an einem Kragen des Einsatzteils befestigt, was eine besonders einfache und schnelle Anbringung und Entfernung zur Verstellung des Luftventils erlaubt.

Die vorliegende Erfindung betrifft auch eine Lüftungsanlage mit mehreren Luftleitungen, insbesondere eine Lüftungsanlage für ein Gebäude, die mehrere Luftventile der vorangehend beschriebenen Art umfasst, wobei die Luftventile jeweils in ein Ende einer Luftleitung eingesetzt sind.

Weitere Vorteile und Merkmale der Erfindung ergeben sich aus der nachfolgenden Beschreibung und den in den Zeichnungen dargestellten Ausführungsbeispielen.

Es zeigen:
- Figur 1:: Querschnitt durch eine Ausführungsform eines Luftventils gemäß vorbekanntem Stand der Technik;
- Figur 2:: Vorderansicht einer ersten Ausführungsform eines erfindungsgemäßen Luftventils;
- Figur 3:: Seitenansicht des Luftventils aus Figur 2;
- Figur 4:: Querschnitt entlang Linie B-B aus Figur 3;
- Figur 5:: dreidimensionale Ansicht des Luftventils aus Figur 2;
- Figur 6:: dreidimensionale Ansicht einer zweiten Ausführungsform eines erfindungsgemäßen Luftventils;
- Figur 7:: Seitenansicht des Luftventils aus Figur 6; und
- Figur 8:: Querschnitt entlang Linie C-C aus Figur 7.

Das in Figur 1 dargestellte Luftventil 1 nach dem vorbekannten Stand der Technik ist in das in einer Mauer oder Decke 2 liegende Ende einer Luftleitung 3 eingesetzt. Es hat dazu ein Einsatzteil 4 mit einem konisch zulaufenden Innenbereich 5 und einen nach außen vorstehenden Kragen 6, welcher im eingebauten Zustand an der Unterseite der Decke 2 anliegt. Ein Verschlussteil 7 ist am äußeren Ende einer zentralen Gewindestange 8 befestigt, welche in das Einsatzteil 4 eingeschraubt und über eine Mutter 9 feststellbar ist. Durch unterschiedlich weites ein- oder herausschrauben der Gewindestange 8 kann der zwischen dem oberen Rand 10 des konischen Innenbereichs 5 und dem Verschlussteil 7 frei verbleibende Strömungsquerschnitt variiert und somit die durchgelassene Luftmenge eingestellt werden.

Bei den in den Figuren 2 bis 8 gezeigten erfindungsgemäßen Luftventilen 1 ist das scheibenförmige Verschlussteil 7 um eine in Strömungsrichtung der Luft verlaufende zentrale Achse 11 relativ zum Einsatzteil 4 verdrehbar gelagert. Dabei liegt das Verschlussteil 7 abgedichtet an einem ebenfalls scheibenförmig ausgebildeten und parallel dazu angeordneten Endbereich 12 des Einsatzteils 4 an.

Im Verschlussteil 7 sind zwei Luftdurchgangsöffnungen 13 ausgebildet, die sich jeweils bogenförmig über einen Winkel von ca. 170° entlang einer Kreisbahn erstrecken. Dabei sind die beiden Luftdurchgangsöffnungen 13, die auf verschiedenen Radien liegen, um 180° versetzt einander gegenüberliegend angeordnet.

Im scheibenförmigen Endbereich 12 des Einsatzteils 4 sind ebenfalls zwei bogenförmige Luftdurchgangsöffnungen 14 vorgesehen, die in Form, Größe und Lage den beiden Luftdurchgangsöffnungen 13 im Verschlussteil 7 entsprechen. Durch Verdrehung des Verschlussteils 7 relativ zum Einsatzteil 4 können die beiden aus jeweils einer Luftdurchgangsöffnung 13 des Verschlussteils 7 und einer Luftdurchgangsöffnung 14 des Einsatzteils 4 bestehenden Öffnungspaare unterschiedlich weit in Überdeckung gebracht werden, so dass sich hierdurch unterschiedliche große freie Strömungsquerschnitte 15 einstellen lassen. Insbesondere können die beiden Teile 7 und 4 auch so zueinander positioniert werden, dass kein freier Strömungsquerschnitt verbleibt und keine Luft mehr durchgelassen wird.

Bei der in Figur 2 dargestellten Einstellung betragen die freien Strömungsquerschnitte 15 jeweils ca. 50% des Erstreckungsbereichs der Luftdurchgangsöffnungen 13, 14. Zur genauen und wiederholbaren Einstellbarkeit ist auf dem Verschlussteil 6 eine Pfeilspitze 16 als Markierung angebracht, die bei einer Verdrehung des Verschlussteils 7 entlang einer am Einsatzteil 4 angebrachten und mit einer Anzahl von Einstell-Ziffern versehenen Skala 17 verschiebbar ist.

Im Kragen 6 des Einsatzteils 4 sind drei Montageöffnungen 18 vorgesehen, über die das Luftventil 1 in allgemein bekannter Art und Weise an einer Wand oder Decke montiert werden kann. Zusätzlich weist der Kragen 6 noch drei weitere Montageöffnungen 19 auf, an denen in der Art eines Bajonettverschlusses weitere Anbauteile, beispielsweise Umlenkelemente, Blenden oder Zierelemente montiert werden können.

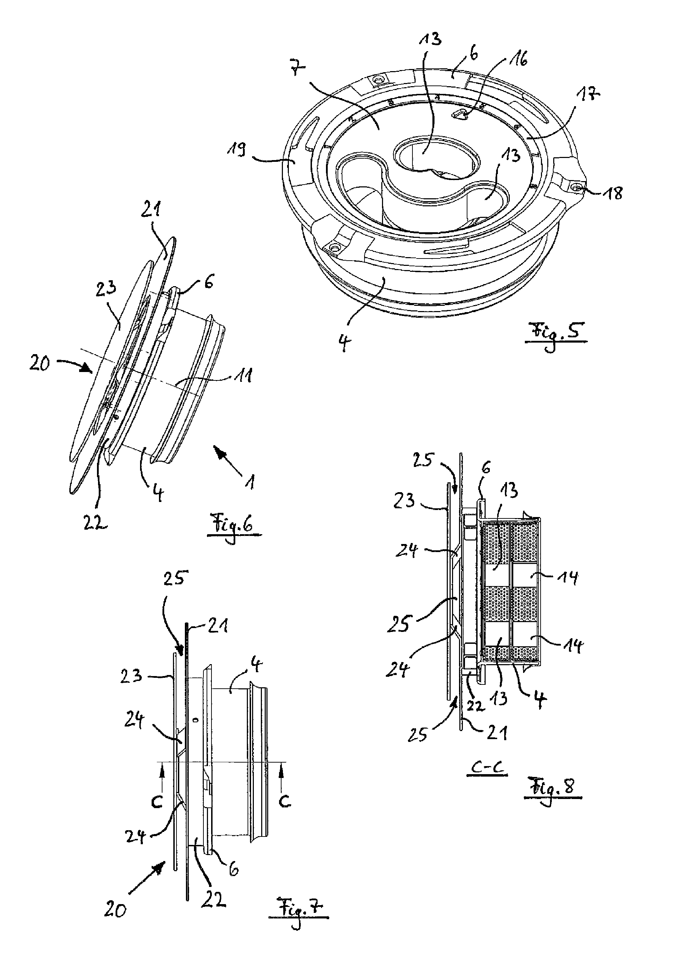

In den Figuren 6 bis 8 ist eine Ausführungsvariante des Luftventils 1 dargestellt, bei der an diesen weiteren Montageöffnungen 19 ein Abdeckelement 20 angebracht ist. Das Abdeckelement 20 umfasst eine ringförmige Lochblende 21 mit einem hülsenförmigen Ansatz 22, der bajonettverschlussartig und somit leicht abnehmbar am Kragen 6 montiert ist. Ferner umfasst das Abdeckelement 20 eine Frontscheibe 23, die über drei um jeweils 120° zueinander versetzte Abstandshalter 24 axial vor der Lochblende 21 liegt. Umfangsmäßig zwischen den Abstandshaltern 24 sind Luftdurchlässe 25 ausgebildet, durch welche die vom Luftventil 1 durchgelassene Luft in radialer Richtung hindurchströmen kann. Der Innendurchmesser der Lochblende 21 entspricht zumindest in etwa dem Aussendurchmesser des Verschlussteils 7 oder dem Durchmesser des hier hülsenförmig ausgebildeten Einsatzteils 4, welches das Verschlussteil 7 umgibt. Der Außendurchmesser der Frontscheibe 23 ist größer als der Innendurchmesser der Lochblende 21 und hier sogar größer als der Außendurchmesser des Kragens 6, so dass die Frontscheibe 23 in axialer Richtung von vorne betrachtet die zentrale Öffnung der Lochblende und damit auch die dahinter liegenden Luftdurchgangsöffnungen 13 des Verschlussteils 7 und die Luftdurchgangsöffnungen 14 des Einsatzteils 4 abdeckt.

Sowohl das Verschlussteil 7 als auch der scheibenförmigen Endbereich 12 es Einsatzteils 4 sind zur Geräuschreduzierung aus einem Material mit schallabsorbierenden Eigenschaften gefertigt (Figuren 4 und 8). Auch das Abdeckelement 20 oder einzelne Bestandteile davon können vorteilhafterweise aus Material mit schallabsorbierenden Eigenschaften bestehen.

## Patentansprüche

1. Verstellbares Luftventil (1), das an einem Ende einer Luftleitung (3) zum Regulieren der durchgelassenen Luftmenge einsetzbar ist, insbesondere für eine Lüftungsanlage eines Gebäudes, umfassend ein Einsatzteil (4) mit mindestens einer Luftdurchgangsöffnung (14) sowie ein Verschlussteil (7), welches relativ zu dem Einsatzteil (4) derart verstellbar ist, dass zwischen der mindestens einen Luftdurchgangsöffnung (14) und dem Verschlussteil (7) verschieden große Strömungsquerschnitte (15) freigebbar sind, **dadurch gekennzeichnet,**
**dass** das Verschlussteil (7) dicht an dem Einsatzteil (4) anliegt und relativ zum Einsatzteil (4) um eine in Strömungsrichtung der Luft verlaufende zentrale Achse (11) drehbar gelagert ist,
und **dass** das Verschlussteil (7) mindestens eine Luftdurchgangsöffnung (13) aufweist, die durch Verdrehen des Verschlussteils (7) unterschiedlich weit mit der mindestens einen Luftdurchgangsöffnung (14) des Einsatzteils (4) in Überdeckung bringbar ist.

2. Luftventil (1) nach Anspruch 1, **dadurch gekennzeichnet, dass** das Verschlussteil (7) in mindestens eine Verschlussposition drehbar ist, in der die mindestens eine Luftdurchgangsöffnung (13) des Verschlussteils (7) die mindestens eine Luftdurchgangsöffnung (14) des Einsatzteils (4) nicht überdeckt.

3. Luftventil (1) nach Anspruch 1 oder 2, **dadurch gekennzeichnet, dass** die Luftdurchgangsöffnungen (13, 14) jeweils ein einem ebenen kreisförmigen Bereich (12) des Einsatzteils (4) und des Verschlussteils (7) ausgebildet sind, die parallel aneinander anliegen.

4. Luftventil (1) nach einem der vorherigen Ansprüche, **dadurch gekennzeichnet, dass** auf dem Einsatzteil (4) oder auf dem Verschlussteil (7) eine Markierung (16), insbesondere ein Pfeil, und auf dem anderen Teil eine Skala (17), die vorzugsweise versehen ist mit mehreren Teilstrichen oder Zahlen, aufgebracht ist.

5. Luftventil (1) nach einem der vorherigen Ansprüche, **dadurch gekennzeichnet, dass** sich mindestens eine Luftdurchgangsöffnung (13, 14) im Einsatzteil (4) und/oder im Verschlussteil (7) entlang eines Kreisbogenabschnitts erstreckt.

6. Luftventil (1) nach Anspruch 5, **dadurch gekennzeichnet, dass** sich im Einsatzteil (4) und/oder im Verschlussteil (7) mehrere Luftdurchgangsöffnungen (13, 14) entlang jeweils eines Kreisbogenabschnitts erstrecken, wobei die Kreisbogenabschnitte unterschiedlich große Radien haben.

7. Luftventil (1) nach Anspruch 5 oder 6, **dadurch gekennzeichnet, dass** sich der Kreisbogenabschnitt über einen Winkel erstreckt, der zwischen 90° und 180°, vorzugsweise zwischen 135° und 175° liegt.

8. Luftventil (1) nach einem der Ansprüche 5 bis 7, **dadurch gekennzeichnet, dass** sich im Einsatzteil (4) und im Verschlussteil (7) jeweils zwei Luftdurchgangsöffnungen (13, 14) entlang jeweils eines Kreisbogenabschnitts erstrecken, wobei die beiden Kreisbogenabschnitte auf unterschiedlichen Radien liegen und in Umfangsrichtung um 180° zueinander versetzt sind.

9. Luftventil (1) nach einem der vorherigen Ansprüche, **dadurch gekennzeichnet, dass** das Einsatzteil (4) und das Verschlussteil (7) aus einem Material mit schallabsorbierenden Eigenschaften, insbesondere aus Polyether-Schaum oder vorzugsweise aus PolyurethanSchaum bestehen.

10. Luftventil (1) nach einem der vorherigen Ansprüche, **dadurch gekennzeichnet, dass** das Einsatzteil (4) einen nach außen vorstehenden Kragen (6) aufweist, der vorzugsweise mit Montageelementen (18, 19), insbesondere mit Montageöffnungen versehen ist.

11. Luftventil (1) nach einem der vorherigen Ansprüche, **dadurch gekennzeichnet, dass** ein Abdeckelement (20) über axiale Abstandshalter (24) lösbar an dem Einsatzteil (4), insbesondere an dem Kragen (6) befestigt ist, wobei das Abdeckelement (20) axial vor den Luftdurchgangsöffnungen (13, 14) liegt und diese verdeckt, und wobei mittels der Abstandshalter (24) radiale Luftdurchlässe (25) zwischen dem Einsatzteil (4) und dem Abdeckelement (20) ausgebildet sind.

12. Lüftungsanlage für ein Gebäude, umfassend mehrere Luftleitungen, **dadurch gekennzeichnet, dass** sie mehrere Luftventile (1) nach einem der vorherigen Ansprüche umfasst, die jeweils in ein Ende einer Luftleitung eingesetzt sind.
